# EUROPÄISCHE PATENTSCHRIFT

(11) **EP 2 832 938 B1**
(45) Veröffentlichungstag und Bekanntmachung des Hinweises auf die Patenterteilung: **28.09.2016**
(21) Anmeldenummer: 14178102.1
(22) Anmeldetag: 23.07.2014
(51) Int. Cl.: E04H 12/08, E02B 17/00

(54) **Flanschverbindung an einer Offshore-Struktur**
Flange connection on an offshore structure
Raccordement à brides pour structure offshore

(30) Priorität: 01.08.2013 DE 102013012712
(43) Veröffentlichungstag der Anmeldung: 04.02.2015
(73) Patentinhaber: RWE Innogy GmbH, 45127 Essen (DE)
(72) Erfinder: Bartminn, Daniel, 25335 Elmshorn (DE); Freisen, Michael, 28209 Bremen (DE); Lüddecke, Falk, 06888 Mühlanger (DE); Otaibi, Walid Kh. A. Al, 34125 Kassel (DE); Tom Wörden, Florian, 27638 Wremen (DE)
(74) Vertreter: Kierdorf Ritschel Richly

(56) Entgegenhaltungen:
- CN-U- 201 461 268
- FR-A1- 2 906 007

## Beschreibung

Die Erfindung betrifft eine Flanschverbindung einer Offshore-Struktur, umfassend ein erstes unteres Anschlussprofil und ein mit dem ersten unteren Anschlussprofil verbundenes zweites oberes Anschlussprofil, wobei das erste untere und das zweite obere Anschlussprofil sich jeweils über einen Flansch gegeneinander abstützen, die Flansche jeweils fluchtend zueinander ausgerichtete Durchgriffsöffnungen aufweisen und die Durchgriffsöffnungen der Flansche von Bolzen durchsetzt sind.

Unter Anschlussprofilen im Sinne der vorliegenden Erfindung sind insbesondere mit Bolzen gegeneinander verspannte Segmente bzw. Rohrschüsse eines Offshore-Turmbauwerks zu verstehen. Es handelt sich dabei um Stahlrohrschüsse, die über Verbindungsflansche mit vorgespannten Bolzen oder Schrauben gegeneinander gesichert sind. Hierbei kann es sich beispielsweise um die einzelnen Rohrschüsse des Turmbauwerks oder um einen Gründungspfahl mit einem Übergangsstück (Monopile/Transition Piece) eines Offshore-Bauwerks handeln. Ist als Turmbauwerk beispielsweise ein Turm mit einem Windkraftgenerator vorgesehen, kann die geflanschte Verbindung auch den Übergang zwischen dem Turmbauwerk und einer Gondel des Windkraftgenerators oder den Übergang zwischen anderen Rohrschüssen bilden. Die erfindungsgemäße Offshore-Struktur ist nicht auf Offshore-Windkraftgeneratoren beschränkt, vielmehr kann diese auch als Offshore-Bohr-oder Förderplattform ausgebildet sein.

Grundsätzlich sind geflanschte und verbolzte Verbindungen an Offshore-Strukturen sowohl verhältnismäßig rauen Wetterbedingungen als auch u. U. der Einwirkung von Seewasser ausgesetzt. Insbesondere wenn solche Flanschverbindungen verhältnismäßig dicht über dem Meeresspiegel angeordnet sind, können diese bei verhältnismäßig großen Wellenamplituden zeitweise unter Wasser geraten. Je nach Wellenhöhe sind die Stoßfugen einem erhöhten hydrostatischen Druck ausgesetzt, sodass die Dichtigkeit der Flanschverbindungen unter Umständen nicht über die gesamte Lebensdauer des Bauwerks gewährleistet werden kann.

Der Abdichtung der Flanschverbindung wird daher besondere Aufmerksamkeit zuteil. Bekannte Maßnahmen zur zusätzlichen Abdichtung der Stoßfugen sehen die Aufbringung von zusätzlichen Dichtbandagen um die Stoßfugen vor. Diese Dichtbandagen sind allerdings ebenfalls den Wetterbedingungen stark ausgesetzt. Bestimmte elastomere oder bituminöse Dichtmittel, die häufig in Fugenbereichen Anwendung finden, sind nicht langzeit-UV- oder Meerwasserbeständig, sodass die Dichtungen nach einer bestimmten Zeit durchaus versagen können.

Des Weiteren ergeben sich durch verschiedene Installationstechniken wie Rammen und Vibrieren unterschiedliche Anforderungen an die geometrische Ausbildung, die idealerweise so zu gestalten ist, dass jegliches Einbringverfahren angewendet werden kann.

Dokument CN201461268U offenbart eine Motorraumdeckel mit einer Flanschverbindung für einen windgetriebenen Generator. Die Abdeckung verhindert, dass Regenwasser in den Motorraum eintreten kann.

Der Erfindung liegt daher die Aufgabe zugrunde, eine Flanschverbindung zwischen zwei Anschlussprofilen einer Offshore-Struktur in Bezug auf die Abdichtung zu verbessern.

Die Erfindung adressiert ebenfalls die Anforderungen, die sich aus unterschiedlichen Einbringverfahren ergeben.

Die Aufgabe wird gelöst, siehe Anspruch 1, durch eine Flanschverbindung einer Offshore-Struktur, umfassend ein erstes unteres Anschlussprofil als Stützpfahl und ein mit dem ersten unteren Anschlussprofil verbundenes zweites oberes Anschlussprofil als Anschlusssegment eines Turmbauwerks, wobei das erste untere und das zweite obere Anschlussprofil sich jeweils über einen Flansch gegeneinander abstützen, die Flansche jeweils fluchtend zueinander ausgerichtete Durchgriffsöffnungen aufweisen und die Durchgriffsöffnungen der Flansche von Bolzen, Gewindebolzen oder Schrauben oder dergleichen durchsetzt sind, wobei das erste untere und/oder das zweite obere Anschlussprofil wenigstens eine umlaufende

Manschette aufweisen, die eine Stoßfuge zwischen den Flanschen außen verdeckt und die einen an die Stoßfuge angrenzenden Ringraum bildet, der über wenigstens eine Drainageöffnung eine selbsttätige Entwässerung in Gewichtskraftrichtung zulässt.

Das erfindungsgemäße Dichtkonzept weicht von dem bekannten Prinzip der vollständigen Abdeckung der Stoßfuge mittels eines elastomeren oder bituminösen Dichtmittels ab. Erfindungsgemäß ist eine Drainage von Feuchtigkeit vorgesehen, die im Bereich der Stoßfuge außen ansteht oder die in die Stoßfuge eingedrungen sein sollte.

Die Anschlusselemente im Sinne der Erfindung können beispielsweise Rohrsektionen oder Rohrschüsse sein, die einen innen umlaufenden Flansch mit innen angeordneten Durchgriffsöffnungen aufweisen. Die Erfindung umfasst allerdings auch solche Flanschverbindungen, bei denen sich die Flansche außen umlaufend erstrecken und die Befestigungsmittel entsprechend exponiert sind. Erfindungsgemäß wird allerdings eine nicht exponierte Anordnung der Befestigungsmittel bevorzugt.

Die Begriffe "unten", "oben" und "in Gewichtskraftrichtung" im Sinne der vorliegenden Erfindung beziehen sich grundsätzlich auf die Einbaulage der Struktur.

Unter einer selbsttätigen Entwässerung im Sinne der vorliegenden Erfindung ist eine schwerkraft- bzw. gewichtskraftbedingte Entwässerung ohne zusätzliche Hilfsmittel zu verstehen.

Dass die Manschette die Stoßfuge zwischen den Flanschen außen verdeckt, bedeutet im Sinne der Erfindung, dass die Stoßfuge unterhalb der Manschette geschützt angeordnet ist, wobei allerdings die Manschette mit Abstand zu der Stoßfuge angeordnet ist und die Stoßfuge nicht hermetisch abschließt. Vielmehr definiert die Manschette einen Ringraum mit dem die Stoßfuge kommuniziert. Der Ringraum ist zweckmäßigerweise so geöffnet, dass in diesen eindringendes Wasser bzw. in diesen eindringende Flüssigkeit/Feuchtigkeit schwerkraftbedingt selbsttätig entweichen kann.

Bei einer bevorzugten Ausführungsform der Flanschverbindung gemäß der Erfindung ist vorgesehen, dass die Manschette von einer umlaufenden Schürze gebildet wird, die an dem in Einbaulage oberen zweiten Anschlussprofil vorgesehen ist. Die Schürze kann beispielsweise einstückig mit dem zweiten Anschlussprofil ausgebildet sein und das erste untere Anschlussprofil übergreifen.

Bei dieser besonders vorteilhaften Variante der Flanschverbindung kann vorgesehen sein, dass die Schürze einen umlaufenden Drainagespalt bildet, mit anderen Worten, dass die Schürze nach unten im Wesentlichen offen ist.

Der Drainagespalt kann beispielsweise mittels wenigstens einer umlaufenden Dichtleiste zur Umgebung verschlossen sein, derart, dass ein Eindringen von Flüssigkeit von außen erschwert wird, allerdings ein Ablaufen der Flüssigkeit durchaus noch möglich ist.

Die Dichtleiste kann beispielsweise als Klappendichtung ausgebildet sein, die den Drainagespalt gegen von außen eindringende Flüssigkeit abdichtet.

Bei der zuvor beschriebenen Variante der Flanschverbindung gemäß der Erfindung kann vorgesehen sein, dass sich in der Stoßfuge wenigstens eine umlaufende Dichtnut mit einer in dieser eingelegten Elastomerdichtung erstreckt und dass die Dichtnut außen von wenigstens einer Drainagenut eingefasst ist, die vorzugsweise ebenfalls vollständig umlaufend ist und in die kein Dichtmittel eingesetzt ist. Die Drainagenut ist vorzugsweise über wenigstens eine sich etwa radial bzw. schräg auswärts erstreckende Drainagebohrung mit dem Ringraum verbunden. Selbstverständlich können über den Umfang der Drainagenut mehrere Drainagebohrungen vorgesehen sein.

Innerhalb der aufeinanderliegenden Stirnflächen der Flansche ist innerhalb wenigstens einer dieser Stirnflächen eine umlaufende Doppelnut angeordnet, von der nur eine Nut beispielsweise eine elastomere O-Ring-Dichtung aufnimmt, die durch einen entsprechenden Vorsprung in der Stirnfläche des gegenüberliegenden Flansches gesichert sein kann. Der äußere Rand der inneren, den Dichtring aufnehmenden Dichtnut kann beispielsweise geringfügig niedriger angeordnet sein, als der innere Rand, sodass beispielsweise etwa im Bereich der O-Ring-Dichtung eindringende Feuchtigkeit nach außen in die Drainagenut getrieben wird.

Der äußere Rand beispielsweise des oberen Flansches kann den unteren Flansch mit einer umlaufenden Tropfnase übergreifen, sodass etwa aus der Stoßfuge austretende Feuchtigkeit nach unten in den Ringraum der Manschette abgeleitet wird.

Bei einer Variante der Flanschverbindung gemäß der Erfindung ist vorgesehen, dass die Manschette durch eine Muffe des ersten unteren Anschlussprofils gebildet wird, die das zweite obere Anschlussprofil mit Abstand umschließt. In diesem Falle ist es zweckmäßig, wenn die Muffe einstückig mit dem ersten unteren Anschlussprofil ausgebildet ist und eine umlaufende Begrenzung des Flansches des ersten unteren Anschlussprofils bildet.

Besonders günstig ist es, wenn der Flansch so deutlich unterhalb einer Muffenoberkante bzw. einer Stirnseite der Muffe angeordnet ist, dass das Anbringen von herkömmlichen Klemmbacken an die Muffe möglich ist, um beispielweise so über die Muffe das Anschlussprofil, beispielsweise in Form eines Monopiles, in den Untergrund einvibrieren zu können. Der Flansch kann beispielsweise ca. 300 mm bis 800 mm unterhalb der Muffenoberkante angeordnet sein.

Die Muffe kann beispielsweise von wenigstens einem Drainagekanal durchsetzt sein, der den Ringraum mit der Umgebung verbindet, wobei der Drainagekanal sich vorzugsweise durch einen Wurzelbereich der Muffe erstreckt.

Wenn die Muffe beispielsweise eine Wandstärke aufweist, die etwa der Wandstärke des betreffenden Anschlussprofils entspricht, ist dies besonders günstig, wenn beispielsweise das erste untere Anschlussprofil als Stützpfahl ausgebildet ist. In diesem Falle lässt sich das erste untere Anschlussprofil durch Rammen oder Vibrieren über eine umlaufende Stirnfläche der Muffe in den Meeresuntergrund eintreiben. Dies hat den Vorteil, dass die zum Rammen oder Meeresuntergrund eintreiben. Dies hat den Vorteil, dass die zum Rammen oder Eintreiben benötigten Kräfte nicht unmittelbar in den Flansch des ersten unteren Anschlussprofils eingeleitet werden müssen, der Flansch des ersten unteren Anschlussprofils also im Wesentlichen frei von Verformungskräften bleibt.

Besonders zweckmäßig ist es, wenn der Ringraum zwischen der Muffe und dem ersten unteren Anschlussprofil mittels eines umlaufenden Schutzdachs oder Schutzblechs abgedeckt ist, sodass der Ringraum im Wesentlichen freigehalten wird von Feuchtigkeit, die von oben eindringen könnte.

Bei einer weiteren besonders vorteilhaften Variante der Flanschverbindung gemäß der Erfindung ist vorgesehen, dass die Stoßfuge zwischen den Flanschen mit Gefälle von außen nach innen ausgebildet ist und/oder dass in der Stoßfuge wenigstens eines Flansches wenigstens eine erhöhte Kontaktfläche vorgesehen ist, sodass Kräfte, die beim Errichten der Offshore-Struktur in die Anschlussprofile eingeleitet werden, im Wesentlichen außerhalb der Abdichtung der Stoßfuge verlaufen. Mit anderen Worten, durch entsprechende Anordnung von Treibflächen lässt sich der Kraftfluss durch die Flanschverbindung beeinflussen, derart, dass der wesentliche Teil des Kraftflusses über die Flächen außerhalb der Abdichtung abgeleitet wird. Dies kann einerseits dadurch erfolgen, dass die Stoßfugen von der Außenseite zur Innenseite der Flansche ein leichtes Gefälle aufweisen oder dass eine erhöhte Kontaktfläche oder Stützfläche in der Stoßfuge wenigstens eines Flansches vorgesehen ist, die sich von einer Restfläche des betreffenden Flansches abhebt bzw. abgesetzt ist.

Bei der Flanschverbindung gemäß der Erfindung ist das erste untere Anschlussprofil als Stützpfahl bzw. als sogenannter "Monopile" ausgebildet und das zweite Anschlussprofil ist als Anschlusssegment eines Turmbauwerks ausgebildet, beispielsweise als sogenanntes "Transition Piece".

Die Erfindung wird nachstehend anhand eines in den Zeichnungen dargestellten Ausführungsbeispiels erläutert.

Es zeigen:
- Figur 1: einen Querschnitt durch eine Flanschverbindung gemäß einem ersten Ausführungsbeispiel der Erfindung,
- Figur 2: einen Querschnitt durch eine Flanschverbindung gemäß einem zweiten Ausführungsbeispiel der Erfindung,
- Figur 3: eine Ansicht eines weiteren Ausführungsbeispiels gemäß der Erfindung, das in etwa dem Ausführungsbeispiel gemäß Figur 2 entspricht.

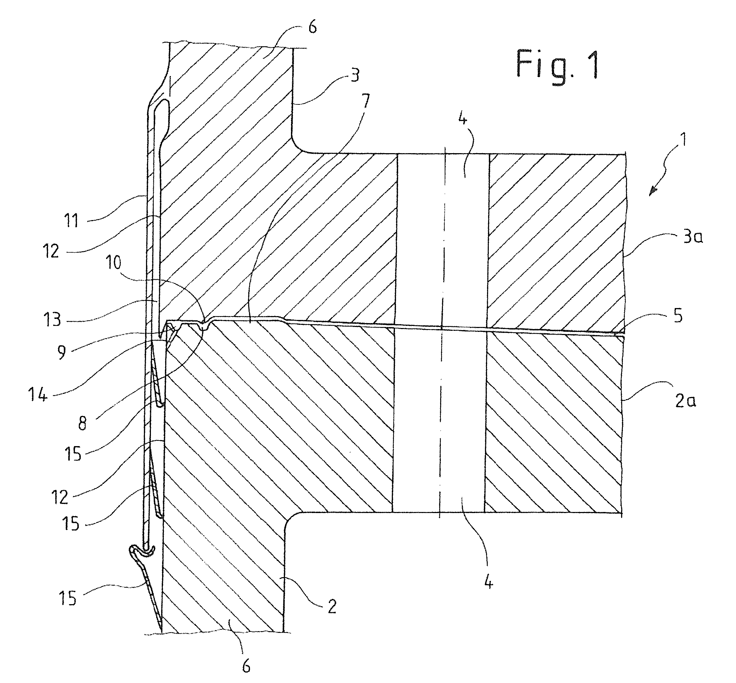

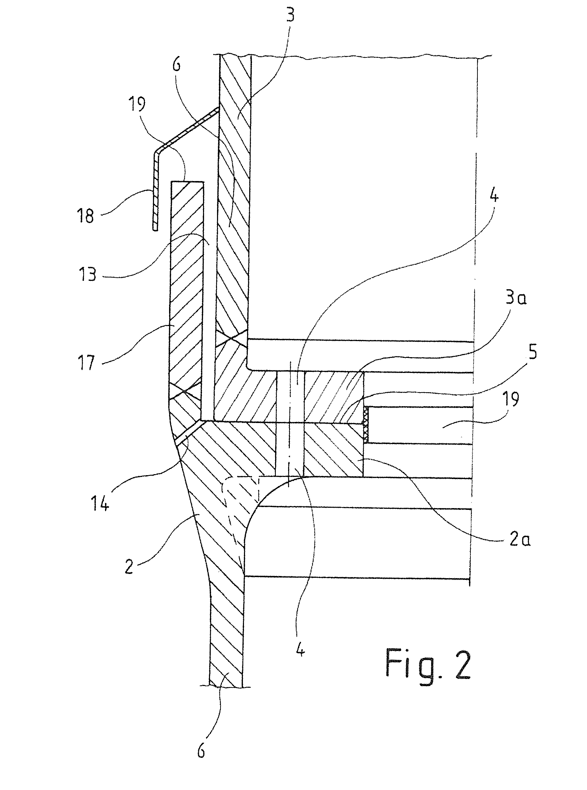

Es wird zunächst Bezug genommen auf das in Figur 1 dargestellte Ausführungsbeispiel. Die Figur 1 zeigt einen Querschnitt durch eine Flanschverbindung 1 zwischen einem Stützpfahl als erstes unteres Anschlussprofil 2 und einem Transition Piece als zweites oberes Anschlussprofil 3 einer Offshore-Struktur. Sowohl das erste untere Anschlussprofil 2 als auch das zweite obere Anschlussprofil 3 sind als Rohrsektionen/Rohrschüsse aus Stahlrohr ausgebildet, von denen die Figuren 1 und 2 jeweils nur einen Teilschnitt zeigen. Die Anschlussprofile 2 und 3 umfassen jeweils innen umlaufende Flansche 2a, 3a, wobei als Flansch 2a der Flansch des ersten unteren Anschlussprofils 2 bezeichnet ist und mit dem Bezugszeichen 3a der Flansch des zweiten oberen Anschlussprofils 3 bezeichnet ist.

In jedem der Flansche 2a, 3a sind Durchgriffsöffnungen 4 vorgesehen, die zur Herstellung der Flanschverbindung 1 fluchtend zueinander ausgerichtet sind und mit nicht dargestellten Gewindebolzen durchsetzt sind. Die Bolzen sind durch entsprechende Muttern vorgespannt, wobei die Muttern sich jeweils auf den Flanschen 2a, 3a außenseitig abstützen. Innenseitig bilden die Flansche 2a, 3a eine Stoßfuge 5, über die die Anschlussprofile 2 und 3 gegeneinander abgestützt sind. Das untere Anschlussprofil 2 kann beispielsweise als Stützpfahl beispielsweise in Form eines Monopiles ausgebildet sein und das zweite obere Anschlussprofil 3 kann als sogenanntes "Transition Piece" ausgebildet sein.

Bei der Variante der Flanschverbindung 1 gemäß Figur 1 erstreckt sich die Stoßfuge 5 zwischen den Flanschen 2a, 3a leicht geneigt bezogen auf eine Horizontale. Die Stoßfuge ist von außen nach innen mit einem Gefälle von etwa 0,5° bis 3° ausgebildet. Das heißt, dass die Stoßfuge 5 in Richtung auf die Innenseite der Anschlussprofile 2, 3 fallend ausgebildet ist, so, dass bei vertikaler Krafteinleitung in eine Wandung 6 der Anschlussprofile 2, 3 der Kraftfluss im Wesentlichen durch die Wandung 6 verläuft.

Darüber hinaus ist in der Stirnfläche des Flansches 2a des ersten unteren Anschlussprofils 2 eine umlaufende gegenüber einer Restfläche abgesetzte Stützfläche 7 vorgesehen, über die beispielsweise das als Stützpfahl ausgebildete erste untere Anschlussprofil in den Meeresuntergrund eintreibbar ist. Die Stützfläche 7 kann beispielsweise aus einem besonders gehärteten Stahl ausgebildet sein. Diese befindet sich vorzugsweise in einer Linie mit den Wandungen 6 des ersten unteren Anschlussprofils 2 und des zweiten oberen Anschlussprofils 3.

Außenseitig an die Stützfläche 7 angrenzend ist in dem Flansch 2a des unteren Anschlussprofils eine umlaufende Dichtnut 8 vorgesehen. Die Dichtnut 8 nimmt eine nicht dargestellte O-Ring-Dichtung auf und ist außen konzentrisch von einer umlaufenden Drainagenut 9 umgeben.

Die Dichtnut 8 wird von einer umlaufenden Dichtwulst 10 der Stirnfläche des Flansches 3a des oberen Anschlussprofils verschlossen.

An dem zweiten oberen Anschlussprofil ist außen eine umlaufende Schürze 11 vorgesehen, welche einstückig an das obere Anschlussprofil 3 angeformt ist und die sich etwa von oberhalb des Flansches 3a bis deutlich unterhalb der Stoßfuge 5 erstreckt, sodass die Stoßfuge 5 durch die Schürze 11 von außen abgedeckt ist. Die Schürze 11 erstreckt sich mit Abstand zu einer Außenwand 12 der Anschlussprofile 2, 3 und bildet so einen Ringraum 13, der die Anschlussprofile 2, 3 im Bereich der Stoßfuge 5 umschließt. Der Ringraum 13 bildet einen Drainagespalt, der nach unten geöffnet ist. Die Drainagenut 9 in der Stoßfuge 5 ist mit mehreren Drainagekanälen 14, die über den Umfang der Flanschverbindung 1 in regelmäßigen Abständen angeordnet sind, mit dem von der Schürze 11 gebildeten Ringraum 13 verbunden. Die Stoßfuge 5 mündet ebenfalls in den Ringraum 13. Etwa in die Stoßfuge 5 eingedrungenes Wasser wird beispielsweise über die Drainagenut 9 und die Drainagekanäle 14 in den Ringraum 13 abgeführt. Selbstverständlich kann Feuchtigkeit auch über die Mündung der Stoßfuge 5 in den Ringraum 13 abgeführt werden.

Bei dem beschriebenen Ausführungsbeispiel ist der Ringraum 13 nach unten, d. h. in Gewichtskraftrichtung mit insgesamt drei untereinander angeordneten, umlaufenden Klappendichtungen 15 abgedichtet. Die Klappendichtungen 15 sind als schwenkbeweglich an die Schürze 11 angelenkte Dichtleisten ausgebildet, die beispielsweise an ihrem von der Schürze 11 abliegenden Ende jeweils mit einer elastomeren Dichtlippe versehen sein können. Die Klappendichtungen 15 erlauben eine Drainage von etwa in dem Ringraum 13 anfallender Flüssigkeit in Gewichtskraftrichtung, diese werden jedoch bei ansteigendem Wasserspiegel von dem hydrostatischen Druck der Wassersäule gegen die Außenwand 12 des ersten unteren Anschlussprofils 2 gedrückt, sodass die Flüssigkeitssäule nicht in den Ringraum 13 eintreten kann. Die Anzahl der Klappendichtungen 15 kann variieren.

Das erfindungsgemäße Entwässerungsprinzip ist auch ohne die gezeigten Klappendichtungen 15 realisierbar.

Um ein gerichtetes Abführen von Feuchtigkeit aus der Stoßfuge 5 in den Ringraum 13 zu ermöglichen, ist der äußere an die Stoßfuge 5 angrenzende Rand des zweiten oberen Anschlussprofils 3 mit einer überhängenden, umlaufenden Schulter bzw. Tropfnase 16 versehen, die den äußeren Rand des ersten unteren Anschlussprofils 2 übergreift.

Eine Variante der Flanschverbindung 1 gemäß der Erfindung ist in Figur 2 dargestellt. Gleiche Bauteile sind bei der in Figur 2 dargestellten Variante der Flanschverbindung 1 mit gleichen Bezugszeichen versehen. Anstelle einer an dem zweiten oberen Anschlussprofil 3 angeordneten, hängenden Schürze 11 als Manschette wird bei der Variante der Flanschverbindung 1 gemäß Figur 2 die Manschette durch eine Muffe 17 des ersten unteren Anschlussprofils gebildet. Die Muffe 17 definiert eine Querschnittserweiterung des ersten unteren Anschlussprofils 2. Diese bildet eine randseitige Einfassung des Flansches 2a des ersten unteren Anschlussprofils und ist einstückig mit dem ersten unteren Anschlussprofil 2 ausgebildet, beispielsweise mit diesem verschweißt. Die Wandung 6 der Muffe entspricht in ihrer Wandstärke der Wandstärke der Wandung 6 des ersten unteren Anschlussprofils sowie des zweiten oberen Anschlussprofils. Im Übrigen sind die Anschlussprofile 2 und 3 nach dem Ausführungsbeispiel gemäß Figur 2 ebenfalls als Stahlrohrsektionen oder Stahlrohrschüsse ausgebildet, wobei das erste untere Anschlussprofil 2 als Stützpfahl ausgebildet ist und das zweite obere Anschlussprofil 3 als sogenanntes "Transition Piece". Diese sind stoßseitig bzw. stirnseitig über einen Flansch 2a des ersten unteren Anschlussprofils und einen Flansch 3a des zweiten oberen Anschlussprofils aneinander gefügt und in der zuvor beschriebenen Art und Weise verbolzt. Die Bolzenverbindung ist auch hier aus Vereinfachungsgründen nicht dargestellt.

Bei diesem Ausführungsbeispiel definiert die Muffe 17 eine die Stoßfuge 5 zwischen den Flanschen 2a, 3a außen abdeckenden Manschette, die einen Ringraum 13 zwischen der Außenwand 12 des zweiten oberen Anschlussprofils 3 und der Innenwand der Muffe 17 definiert. Dieser Ringraum ist nach oben geöffnet und durch ein umlaufendes Blechdach 18 abgedeckt.

Durch die relative Lage des Flansches 2a zu einer Stirnfläche 19 bzw. Oberkante der Muffe 17 können Klemmbacken eines Vibrationsgeräts an der Muffe 17 angebracht werden, ohne den Flansch übergreifen zu müssen.

Wird das erste untere Anschlussprofil 2 durch Rammen in den Untergrund eingetrieben, bietet die Geometrie des ersten unteren Anschlussprofils 2 gemäß Figur 2 den Vorzug, dass das Einleiten von Schlägen auf die Stirnfläche 19 der Muffe 17 den Flansch 2a von Ermüdungskräften und Verformungen entlastet.

Bei Anschlussprofilen herkömmlicher Bauweise ist es üblich, die zum Eintreiben des Anschlussprofils erforderlichen Kräfte unmittelbar in den Flansch einzuleiten, was zu der unerwünschten Materialermüdung des Anschlussprofils im Bereich des Flansches führt.

Der Nutgrund des Ringraums 13 ist mit sich schräg nach unten und auswärts erstreckenden Drainagekanälen 14 an die Umgebung angeschlossen, sodass sich etwa in dem Ringraum 13 ansammelnde Feuchtigkeit/Flüssigkeit über die Drainagekanäle 14 ablaufen kann. Über den Umfang der Flanschverbindung 1 sind mehrere in gleichem Abstand zueinander angeordnete Drainagekanäle 14 vorgesehen.

In der Stoßfuge 5 ist eine umlaufende Dichtnut 8 angeordnet, die ebenfalls eine nicht dargestellte O-Ring-Dichtung aufnimmt.

Die Muffe 17 kann zumindest teilweise aus einem gehärteten Stahl bestehen, sodass das erste untere Anschlussprofil 2 über die Stirnfläche 19 der Muffe 17 in den Meeresuntergrund eintreibbar ist.

Die Stoßfuge 5 ist innenseitig umlaufend mit einem Dichtband 20 verschlossen. Das Dichtband 20 kann beispielsweise in Form einer bituminosen Dichtung ausgeführt sein.

Das Blechdach 18 ist vorzugsweise als gekantetes Blech ausgebildet, welches die Muffe 17 ebenfalls nach Art einer Schürze übergreift. Das Blechdach 18 kann beispielsweise mit der Außenwand 12 des zweiten oberen Anschlussprofils verschweißt sein.

Durch die geometrische Gestaltung der Flanschverbindung 1 insbesondere nach dem Ausführungsbeispiel gemäß Figur 2, wird ermöglicht, mit einem Detail sowohl eine drainierte Abdichtung vorzusehen als auch das erste untere Anschlussprofil 2 wahlweise durch Vibrieren oder durch Rammen einzubringen.

Bei der in Figur 2 dargestellten Variante der Flanschverbindung 1 gemäß der Erfindung ist der Durchmesser des ersten unteren Anschlussprofils 2 im Bereich der Muffe 17 gegenüber dem Nenndurchmesser vergrößert. Der Nenndurchmesser kann beispielsweise etwa 5500 mm betragen (Außendurchmesser), der Außendurchmesser der Muffe 17 kann beispielsweise in der Größenordnung von 5750 mm betragen. Der Abstand der Stirnfläche 19 der Muffe 17 von der Trennfuge 5 des Flansches 2a kann etwa 300 mm bis 800 mm betragen. Die Wandstärke der Wandung 6 der Anschlussprofile 2, 3 kann beispielsweise in der Größenordnung von 70 mm bis 90 mm betragen.

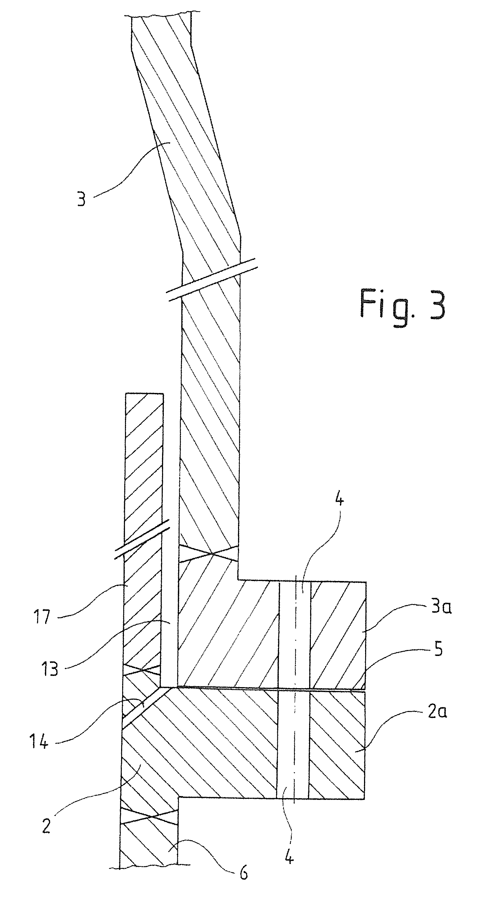

In Figur 3 ist eine weitere Variante der erfindungsgemäßen Flanschverbindung 1 dargestellt. Diese Variante der Flanschverbindung 1 entspricht etwa derjenigen gemäß Figur 2, wobei bei diesem Ausführungsbeispiel die Muffe 17 keinen gegenüber dem Außendurchmesser des ersten unteren Anschlussprofils 2 vergrößerten Außendurchmesser aufweist. Die Muffe 17 ist nicht aufgeweitet, wie dies in Figur 2 dargestellt ist, vielmehr ist das zweite obere Anschlussprofil 3 im Bereich des einstückig angeformten, innen umlaufenden Flansches 3a eingeschnürt, so dass dieses einen gegenüber dem Nenndurchmesser bzw. Außendurchmesser des zweiten oberen Anschlussprofils 3 im Durchmesser verringertes Steckende bildet. In diesem Fall kann beispielsweise ebenfalls das zweite obere Anschlussprofil als Transition Piece ausgebildet sein, wohingegen das erste untere Anschlussprofil 2 als Monopile (Stützpfahl) ausgebildet ist. Das erste untere Anschlussprofil 2 kann beispielsweise einen Außendurchmesser von 5500 mm aufweisen, das zweite obere Anschlussprofil 3 kann beispielsweise im Bereich des Flansches 3a über eine Höhe von etwa 750 mm einen verringerten Außendurchmesser in der Größenordnung von etwa 5330 mm aufweisen.

Die zuvor genannten Maße sind nur beispielhaft erwähnt und für die Erfindung nicht kritisch.

### Bezugszeichenliste

- 1: Flanschverbindung
- 2: erstes unteres Anschlussprofil
- 3: zweites oberes Anschlussprofil
- 2a: Flansch des unteren Anschlussprofils
- 3a: Flansch des oberes Anschlussprofils
- 4: Durchgriffsöffnungen
- 5: Stoßfuge
- 6: Wandung
- 7: Stützfläche
- 8: Dichtnut
- 9: Drainagenut
- 10: Dichtwulst
- 11: Schürze
- 12: Außenwand
- 13: Ringraum
- 14: Drainagekanäle
- 15: Klappendichtungen
- 16: Tropfnase
- 17: Muffe
- 18: Blechdach
- 19: Stirnfläche
- 20: Dichtband

## Patentansprüche

1. Flanschverbindung (1) einer Offshore-Struktur umfassend ein erstes unteres Anschlussprofil (2) als Stützpfahl und ein mit dem ersten unteren Anschlussprofil (2) verbundenes zweites oberes Anschlussprofil (3) als Anschlusssegment eines Turmbauwerks, wobei das erste untere und das zweite obere Anschlussprofil (2, 3) sich jeweils über einen Flansch (2a, 3a) gegeneinander abstützen, die Flansche (2a, 3a) jeweils fluchtend zueinander ausgerichtete Durchgriffsöffnungen (4) aufweisen und die Durchgriffsöffnungen (4) der Flansche (2a, 3a) von Bolzen, Gewindebolzen oder Schrauben oder dergleichen durchsetzt sind, wobei das erste untere Anschlussprofil (2) und/oder das zweite obere Anschlussprofil (3) wenigstens eine umlaufende Manschette aufweisen, die eine Stoßfuge (5) zwischen den Flanschen (2a, 3a) außen verdeckt und die einen an die Stoßfuge (5) angrenzenden Ringraum (13) bildet, der über wenigstens eine Drainageöffnung eine selbsttätige Entwässerung in Gewichtskraftrichtung zulässt.

2. Flanschverbindung nach Anspruch 1, **dadurch gekennzeichnet, dass** die Manschette von einer umlaufenden Schürze (11) gebildet wird, die an dem zweiten oberen Anschlussprofil (3) vorgesehen ist, vorzugsweise dass die Schürze (11) einstückig mit dem zweiten oberen Anschlussprofil (3) ausgebildet ist und das erste untere Anschlussprofil (2) übergreift.

3. Flanschverbindung nach Anspruch 2, **dadurch gekennzeichnet, dass** die Schürze (11) einen umlaufenden Drainagespalt bildet, vorzugsweise dass der Drainagespalt mit wenigstens einer umlaufenden Dichtleiste zur Umgebung verschlossen ist.

4. Flanschverbindung nach Anspruch 3, **dadurch gekennzeichnet, dass** die Dichtleiste als Klappendichtung (15) ausgebildet ist, die den Drainagespalt gegen von außen eindringende Flüssigkeit abdichtet.

5. Flanschverbindung nach einem der Ansprüche 1 bis 4, **dadurch gekennzeichnet, dass** sich in der Stoßfuge (5) wenigstens eine umlaufende Dichtnut (8) mit einer in diese eingelegten Dichtung erstreckt und dass die Dichtnut (8) außen von wenigstens einer Drainagenut (9) eingefasst ist, in die kein Dichtmittel eingesetzt ist und die vorzugsweise über wenigstens eine Drainagebohrung mit dem Ringraum (13) kommuniziert.

6. Flanschverbindung nach Anspruch 1, **dadurch gekennzeichnet, dass** die Manschette durch eine Muffe (17) des ersten unteren Anschlussprofils (2) gebildet wird, die das zweite obere Anschlussprofil (3) mit Abstand umschließt, vorzugsweise dass die Muffe (17) einstückig mit dem ersten unteren Anschlussprofil (2) ausgebildet ist und eine umlaufende erste Begrenzung des Flansches (2a) des ersten unteren Anschlussprofils (2) bildet.

7. Flanschverbindung nach Anspruch 6, **dadurch gekennzeichnet, dass** der Flansch (2a) des ersten unteren Anschlussprofils (2) mit Abstand unterhalb einer Stirnfläche (19) der Muffe (17) angeordnet ist.

8. Flanschverbindung nach einem der Ansprüche 6 oder 7, **dadurch gekennzeichnet, dass** die Muffe (17) von wenigstens einem Drainagekanal (14) durchsetzt ist, der den Ringraum (13) mit der Umgebung verbindet, wobei der Drainagekanal (14) sich vorzugsweise durch einen Wurzelbereich der Muffe (17) erstreckt.

9. Flanschverbindung nach einem der Ansprüche 6 bis 8, **dadurch gekennzeichnet, dass** die Wandstärke der Muffe (17) der Wandstärke des ersten unteren Anschlussprofils (2) entspricht.

10. Flanschverbindung nach einem der Ansprüche 6 bis 9, **dadurch gekennzeichnet, dass** der Ringraum (13) zwischen der Muffe (17) und dem ersten unteren Anschlussprofil (2) mittels eines umlaufenden Blechdachs (18) abgedeckt ist.

11. Flanschverbindung nach einem der Ansprüche 1 bis 10, **dadurch gekennzeichnet, dass** die Stoßfuge (5) zwischen den Flanschen (2a, 3a) mit Gefälle von außen nach innen ausgebildet ist und/oder dass in der Stoßfuge (5) wenigstens eines Flansches (2a, 3a) wenigstens eine gegenüber einer Restfläche erhöhte Stützfläche (7) vorgesehen ist.

## Claims

1. Flange connection (1) of an offshore structure comprising a first, lower connection profile (2) as a support pile and a second, upper connection profile (3), which is connected to the first, lower connection profile (2), as a connection segment of a tower structure, wherein the first, lower and the second, upper connection profile (2, 3) are each supported against one another via a flange (2a, 3a), the flanges (2a, 3a) each have through-openings (4) oriented in alignment with one another, and the through-openings (4) in the flanges (2a, 3a) are traversed by bolts, threaded bolts or screws or the like, wherein the first, lower connection profile (2) and/or the second, upper connection profile (3) have at least one peripheral collar which outwardly conceals a butt joint (5) between the flanges (2a, 3a) and which forms an annular space (13) adjoining the butt joint (5), which annular space allows automatic drainage in the direction of weight force via at least one drainage opening.

2. Flange connection according to Claim 1, **characterized in that** the collar is formed by a peripheral skirt (11) which is provided on the second, upper connection profile (3), preferably **in that** the skirt (11) is formed in one piece with the second, upper connection profile (3) and overlaps the first, lower connection profile (2).

3. Flange connection according to Claim 2, **characterized in that** the skirt (11) forms a peripheral drainage gap, preferably **in that** the drainage gap is closed with respect to the surroundings by at least one peripheral sealing strip.

4. Flange connection according to Claim 3, **characterized in that** the sealing strip is designed as a flap seal (15) which seals the drainage gap from liquid penetrating from outside.

5. Flange connection according to one of Claims 1 to 4, **characterized in that** at least one peripheral sealing groove (8) having a seal placed therein extends in the butt joint (5), and **in that** the sealing groove (8) is surrounded on the outside by at least one drainage groove (9) in which no sealing means is inserted and which preferably communicates with the annular space (13) via at least one drainage bore.

6. Flange connection according to Claim 1, **characterized in that** the collar is formed by a sleeve (17) of the first, lower connection profile (2) that encloses the second, upper connection profile (3) at a distance, preferably **in that** the sleeve (17) is formed in one piece with the first, lower connection profile (2) and forms a peripheral first boundary of the flange (2a) of the first, lower connection profile (2).

7. Flange connection according to Claim 6, **characterized in that** the flange (2a) of the first, lower connection profile (2) is arranged at a distance below an end face (19) of the sleeve (17).

8. Flange connection according to either of Claims 6 and 7, **characterized in that** the sleeve (17) is traversed by at least one drainage duct (14) which connects the annular space (13) to the surroundings, wherein the drainage duct (14) preferably extends through a root region of the sleeve (17).

9. Flange connection according to one of Claims 6 to 8, **characterized in that** the wall thickness of the sleeve (17) corresponds to the wall thickness of the first, lower connection profile (2).

10. Flange connection according to one of Claims 6 to 9, **characterized in that** the annular space (13) between the sleeve (17) and the first, lower connection profile (2) is covered by means of a peripheral sheet-metal roof (18).

11. Flange connection according to one of Claims 1 to 10, **characterized in that** the butt joint (5) between the flanges (2a, 3a) is designed with a slope from outside to inside, and/or **in that** at least one supporting surface (7) which is elevated with respect to a remaining surface is provided in the butt joint (5) of at least one flange (2a, 3a) .

## Revendications

1. Raccordement à bride (1) d'une structure offshore comprenant un premier profilé de raccordement (2) inférieur, en tant que pieu de soutien et un deuxième profilé de raccordement (3) supérieur, relié avec le premier profilé de raccordement (2) inférieur, en tant que segment de raccordement d'une tour, le premier et le deuxième profilés de raccordement (2, 3) inférieur et supérieur s'appuyant respectivement l'un sur l'autre par l'intermédiaire d'une bride (2a, 3a), les brides (2a, 3a) comportant chacune des orifices de passage (4) orientés en alignement l'un par rapport à l'autre et les orifices de passage (4) des brides (2a, 3a) étant traversés par des boulons, des boulons filetés ou des vis ou similaires, le premier profilé de raccordement (2) inférieur et/ou le deuxième profilé de raccordement (3) supérieur comportant au moins une manchette périphérique qui recouvre à l'extérieur un joint d'aboutement (5) entre les brides (2a, 3a) et qui forme un espace annulaire (13) adjacent au joint d'aboutement (5) qui par l'intermédiaire d'au moins un orifice de drainage admet un drainage automatique en direction de la force de gravité.

2. Raccordement à bride selon la revendication 1, **caractérisé en ce que** la manchette est formée par un tablier (11) périphérique, qui est prévu sur le deuxième profilé de raccordement (3) supérieur, de préférence **en ce que** le tablier (11) est formé en monobloc avec le deuxième profilé de raccordement (3) supérieur et chevauche le premier profilé de raccordement (2) inférieur.

3. Raccordement à bride selon la revendication 2, **caractérisé en ce que** le tablier (11) forme une fente de drainage périphérique, de préférence **en ce que** la fente de drainage est fermée par rapport à l'environnement par au moins une baguette d'étanchéité périphérique.

4. Raccordement à bride selon la revendication 3, **caractérisé en ce que** la baguette d'étanchéité est conçue sous la forme d'un joint à clapet (15) qui assure l'étanchéité de la fente de drainage par rapport au liquide pénétrant par l'extérieur.

5. Raccordement à bride selon l'une quelconque des revendications 1 à 4, **caractérisé en ce que** dans le joint d'aboutement (5) s'étend au moins une rainure d'étanchéité (8) périphérique avec un joint inséré dans cette dernière et **en ce que** la rainure d'étanchéité (8) est enchâssée à l'extérieur par au moins une rainure de drainage (9) dans laquelle n'est inséré aucun moyen d'étanchéité et qui communique de préférence par l'intermédiaire d'au moins un perçage de drainage avec l'espace annulaire (13).

6. Raccordement à bride selon la revendication 1, **caractérisé en ce que** la manchette est formée par un manchon (17) du premier profilé de raccordement (2) inférieur qui entoure avec un écart le deuxième profilé de raccordement (3) supérieur, de préférence **en ce que** le manchon (17) est formé en monobloc avec la premier profilé de raccordement (2) inférieur et forme une première délimitation périphérique de la bride (2a) du premier profilé de raccordement (2) inférieur.

7. Raccordement à bride selon la revendication 6, **caractérisé en ce que** la bride (2a) du premier profilé de raccordement (2) inférieur est placée avec un écart en-dessous d'une surface frontale (19) du manchon (17).

8. Raccordement à bride selon l'une quelconque des revendications 6 ou 7, **caractérisé en ce que** le manchon (17) est traversé par au moins un canal de drainage (14) qui relie l'espace annulaire (13) avec l'environnement, le canal de drainage (14) s'étendant de préférence à travers une zone de racine du manchon (17).

9. Raccordement à bride selon l'une quelconque des revendications 6 à 8, **caractérisé en ce que** l'épaisseur de paroi du manchon (17) correspond à l'épaisseur de paroi du premier profilé de raccordement (2) inférieur.

10. Raccordement à bride selon l'une quelconque des revendications 6 à 9, **caractérisé en ce que** l'espace annulaire (13) entre le manchon (17) et le premier profilé de raccordement (2) inférieur est recouvert à l'aide d'un toit en tôle (18) périphérique.

11. Raccordement à bride selon l'une quelconque des revendications 1 à 10, **caractérisé en ce que** le joint d'aboutement (5) entre les brides (2a, 3a) est conçu avec des pentes de l'extérieur vers l'intérieur et/ou **en ce que** dans le joint d'aboutement (5) d'au moins une bride (2a, 3a), il est prévu au moins une surface d'appui (7) surélevée par rapport à une surface restante.
